# EUROPEAN PATENT SPECIFICATION

(11) **EP 2 527 119 B1**
(45) Date of publication and mention of the grant of the patent: **19.10.2016**
(21) Application number: 12167779.3
(22) Date of filing: 11.05.2012
(51) Int. Cl.: B25J 15/02, B28B 17/00, B25J 15/00, B28B 7/00

(54) **Method for disengaging the fastening magnet of a dismountable sidewall element by a side robot, and a system with a side robot and a detachable sidewall unit**
Verfahren zum Ablösen eines Befestigungsmagnets eines demontierbaren Seitenwandelements mit einem Seitenroboter und System mit einem Seitenroboter und einem abnehmbaren Seitenwandelement
Procédé pour désengager l'aimant de fixation d'un élément de paroi latérale démontable par un robot latéral et système avec un robot latéral et une paroi latérale démontable

(30) Priority: 25.05.2011 FI 20115518
(43) Date of publication of application: 28.11.2012
(73) Proprietor: Elematic Oyj, 37801 Akaa (FI)
(72) Inventor: Korkiamäki, Pekka, FI-37800 Toijala (FI)
(74) Representative: Berggren Oy Ab

(56) References cited:
- EP-A1- 0 530 504
- EP-A1- 1 273 407
- EP-A2- 1 179 401
- EP-A2- 1 974 883
- DE-A1- 10 107 825
- DE-A1-102006 059 588

## Description

The invention relates to a side robot used in assembling and disassembling molds used in the production of prefabricated concrete elements. More precisely, the invention relates to a method for disengaging the fastening magnet of a detachable sidewall unit by a side robot, and to the structure of a side robot implementing said method.

When manufacturing prefabricated concrete elements, the elements are cast in an element factory in molds that can be vertical molds, such as battery molds, or horizontal molds, such as table molds and tipping molds. For assembling the molds, there are generally used detachable sidewall units that are attached to the mold walls, either horizontal or vertical walls, by means of magnets.

When using horizontal molds, such as table molds or tipping molds, the manufacturing process is started by first building on the casting bed a mold that defines the measures of the product to be cast. Generally this is nowadays carried out by building the mold on a metallic tiltable casting table of mold sidewall units that are attached by means of magnets. When the mold defining the external measures of the mold is finished, inside the mold there are, when necessary, respectively formed areas bordered by sidewall units, for example for windows, doors or other corresponding allocations defining the casting area of the cast product. Moreover, when necessary, various devices are placed on the casting table inside the mold for shaping the outer surface of the cast product or for forming the required allocations on the outer surface, such as cardboard, provided with surface retarder, that is set on the casting table when casting graphic concrete. At the final stage of preparing the mold, it is provided with the necessary reinforcements, whereafter concrete mix is poured in the mold.

For pouring concrete mix in a mold, there is generally used a concrete mix casting arrangement moving above the mold that feeds concrete mix to the casting mold. When employing a tipping mold, this casting of concrete mix in the mold takes place from a casting arrangement placed above the casting table or brought above the casting table. When casting in a circulating mold line, the casting mold is generally brought to a vibrator station provided with casting equipment, in which vibrator station the concrete mix is poured in the mold.

Possibly already during the casting of the concrete mix, but not later than after the concrete mix is poured in the mold, the mold filled with concrete mix is vibrated for compacting the concrete mix and for ensuring that the mold is properly filled. When using tipping molds, said vibration is realized for example by intermediation of vibrators placed under the casting table, and in a circulating mold line in a vibrator station where the concrete mix is poured in the mold, said vibrator station being provided with vibrators for vibrating the casting mold.

After the cast concrete product is cured, the product is in the case of a tipping mold removed from the casting mold by disassembling part of the mold, by tilting the casting table and by lifting the product away from the casting table by means of lifting loops or lugs provided in the product. In a circulating mold line, the mold is transferred to a separate tipping station for removing the cast concrete product from the mold.

The use of robots in assembling horizontal casting molds of prefabricated concrete units is known in the prior art. In the casting mold assembly step, said known side robots generally fetch the detachable sidewall units from storage and set them on predetermined spots on the casting bed. After setting each detachable sidewall unit in place, the side robot locks the sidewall unit in place by activating the fastening magnets fixing the sidewall unit, either part of said magnets or all at the same time. Typically detachable sidewall units to be set in place by side robots are provided with fastening magnet units located inside the sidewall units, said fastening magnet units being operable through the top surface of the sidewall unit, typically by intermediation of a control pin extending upwardly from the top surface.

Known side robots are typically portal robots, where the vertically movable grip unit is moved on the horizontal plane by intermediation of rails or guides. Normally the structure of a portal robot comprises two parallel rails that are spaced apart, with a second pair of rails moving on top of said first pair. A carriage is movable on said second pair of rails, and a vertically movable robot grip unit is attached thereto. The rail structure of portal robots corresponds to the rail structure of a bridge crane, for example.

A known side robot is introduced in the publication EP 1 179 401, describing a portal-type side robot that fetches the detachable sidewall units of a casting mold from storage and sets the sidewall units on predetermined spots of the casting bed for preparing the casting mold, and locks the sidewall units in place by activating the magnet units located inside the sidewall units. The side robot described in said publication is provided with two separate grip units that are vertically movable with respect to each other, said grip units gripping the sidewall units at their side surfaces. In this arrangement, the magnets are activated by a separate pin-like presser that is located in between the grip surfaces of the grip unit, said pin-like presser being arranged to perform a vertical pressing motion for pressing down the magnet unit control pin placed on the top surface of the sidewall unit.

In publication EP 0 530 504 A1 is disclosed a device for production of precast concrete products, where a robot first places permanent magnets on a casting bed and then places a mold sidewall surface element on the magnets, which covers the magnets and thus forms a sidewall of a mold to be formed on the casting bed.

Other known porta-type side robots are described for instance in the publications DE 101 16 230 and EP 1 974 883.

Known side robots cannot, however, be as such used for disengaging sidewall units from the casting bed. This is due to the high fastening forces of the sidewall unit fastening magnets, which forces are typically of the order 8 - 20 kN, and to the structure of the portal robots, where that side robot grip unit is located and moves in between two rails that are spaced apart. Consequently, if the magnet were pulled off the casting bed through intermediation of the grip unit of the side robot, this would cause an excessive load for the structure of the robot.

EP 1 974 883 discloses a method according to the preamble of claim 1, and a system according to the preamble of claim 5.

The side robot according to the present invention is capable of both fastening and disengaging the magnet unit by means of one and the same grip unit. Thus the same side robot can, in addition to assembling the mold, also disassemble it, i.e. there is no need for any separate tools for disengaging the mold fastening magnets.

In an arrangement according to the invention the grip unit of the side robot comprises a support structure surrounding the grip means, and the grip means are vertically movable with respect to said support structure. When disengaging the fastening magnet unit from the casting bed, the support structure of the grip unit of the side robot is supported to the frame structure surrounding the fastening magnet, and the grip means engaged to the operating means of the fastening magnet are moved upwardly, so that the magnet of the magnet unit is forced to be disengaged from the casting bed. Thus the high forces and tensions created while disengaging the magnet can be maintained inside the system formed by the frame structure of the magnet and the grip unit support structure, and they cannot affect other parts of the side robot.

In an arrangement according to the invention, the frame structure surrounding the fastening magnet can constitute the outer surfaces of the sidewall unit, so that the fastening magnet unit forms part of the sidewall unit, or the support structure surrounding the fastening magnet can represent the frame of the fastening magnet unit alone, in which case the magnet unit in question is a separate unit to be used when fastening the sidewall unit.

In an arrangement according to the invention, the vertical motion of the grip elements in relation to the support structure of the grip unit is achieved by means of an eccentric, so that a sufficient pulling force is easily produced in the grip means for disengaging the magnet from the casting bed.

In type, the side robot according to the invention is advantageously a portal robot, where the grip end of the robot is controlled on the horizontal level by intermediation of rails or guides.

The grip end of a side robot according to the invention advantageously comprises two adjacently placed grip units, the grip means of said grip units being arranged to move along the same vertical plane intersecting each grip unit.

More precisely, the method according to the invention is characterized by what is set forth in the characterizing part of claim 1, and the side robot according to the invention is characterized by what is set forth in the characterizing part of claim 5.

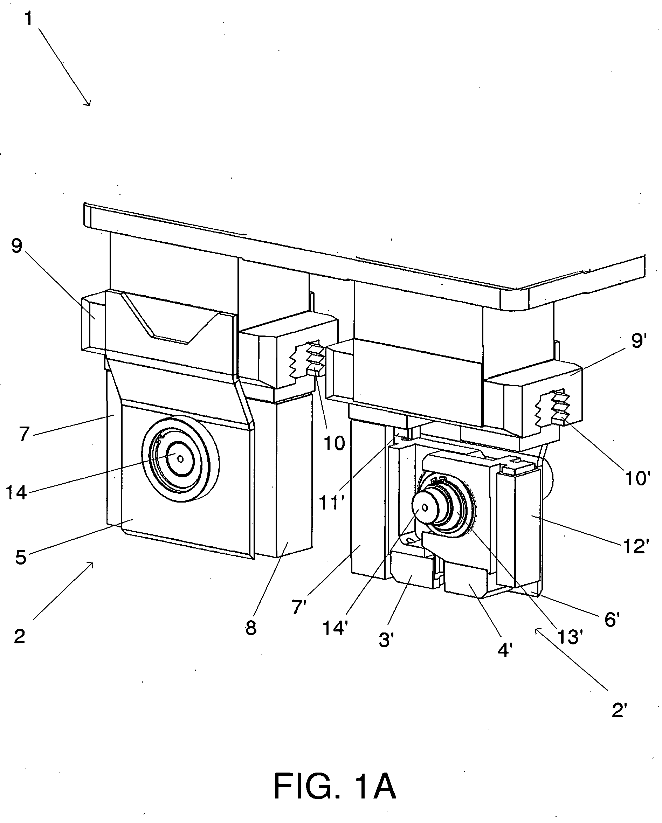

The invention is described in more detail below, by way of example, with reference to the appended drawings, where
Figure 1 A shows the grip end of a side robot according to the invention, viewed diagonally from the side in a three-dimensional illustration, and

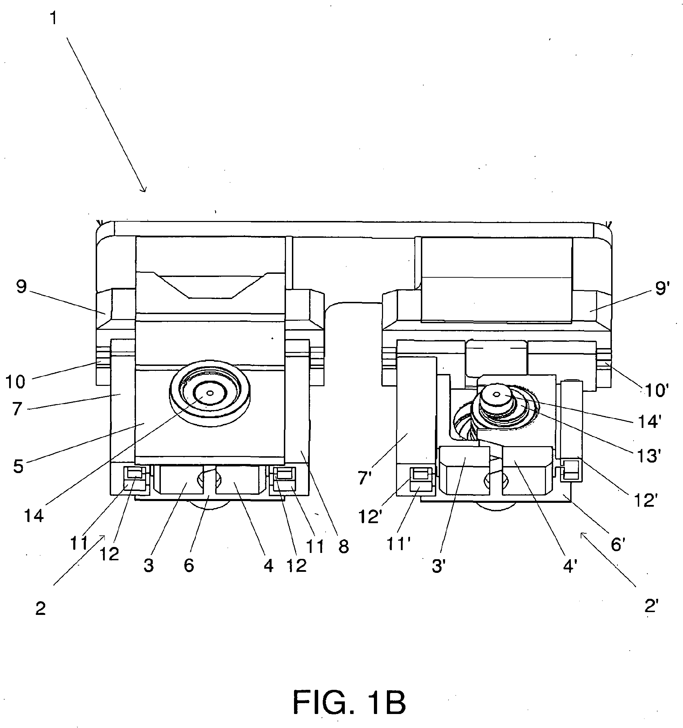

Figure 1B shows the grip end of the side robot of Figure 1A, viewed diagonally from below in a three-dimensional illustration.

Figures 1 A and 1 B illustrate the grip end 1 of a side robot according to the invention, said grip end being provided with two identical grip units 2, 2'. In the drawings, the grip unit 2' is illustrated without the cover plate and the right-hand side support structure in order to show the inner structure of the grip unit.

The grip units 2, 2' comprise catches formed of two catch halves 3 and 4, 3' and 4', as well as a support structure surrounding the catch halves, said support structure comprising cover plates 5 and 6; 6', side supports 7, 8; 7', as well as a top support 9, 9'. Through the top supports 9, 9', the grip units 2, 2' are fastened to the structure of the grip end 1 of the side robot.

The catch halves 3 and 4; 3' and 4', are immovably connected to the side supports 7, 8; 7' on a sideways extending plane, i.e. on the plane of the opening and closing direction of the catch. The side supports 7, 8; 8' in turn are connected to the top supports 9, 9' to be movable in the sideways direction through intermediation of the grooves 10; 10'. By forcing the side supports 7, 8 to move away from each other, for example by intermediation of a hydraulic or pneumatic cylinder in a way known as such, the catch halves 3 and 4 are respectively made to move away from each other in the sideways direction for disengaging the grip. Respectively, by forcing the side supports 7, 8 to approach each other, also the catch halves 3 and 4 approach each other in the sideways direction in order to achieve a grip for the catch.

The catch halves 3 and 4; 3' and 4', are connected to the vertical supports 7 and 8; 7', to be vertically movable. This kind of vertically movable fastening is in the embodiment of the drawings realized by vertical grooves 11, 11' formed in the vertical supports 7, 8; 7', in which the protrusions provided in the outer edges of the catch halves 3 and 4; 3' and 4', are set on the horizontal plane in a form-closed fashion. These vertical grooves are advantageously provided with slide-boosting means 12; 12', such as a layer made of a suitable slide bearing material.

The vertical motion of the catch halves 3 and 4; 3' and 4', in relation to the vertical supports 7, 8; 7' is achieved by an eccentric 13', which is set on an axis 14, 14' extending transversally through the grip units 2, 2'. The eccentric 13' is in the vertical direction set in a form-closed fashion between the protrusions of the upper part of the catch halves 3 and 4; 3' and 4', as can be seen in the drawing, so that by rotating the eccentric 13', there is created a vertical motion of the catch halves in relation to the rest of the structure of the grip units 2, 2'.

When gripping the sidewall unit by the grip units 2, 2' of the side robot grip end 1, first the catch halves 3 and 4; 3' and 4' are shifted away from each other in order to open the catch by moving the vertical supports 7 and 8; 7' further away from each other on the horizontal plane along the grooves 10, 10', for example by intermediation of a hydraulic cylinder. Thereafter the grip end 1 of the side robot is lowered down, so that the opened catch halves 3 and 4; 3' and 4', are set around the knob (not illustrated) extending from the top surface of the sidewall unit. Next, the catch halves 3 and 4; 3' and 4' are moved closer by shifting the vertical supports 7 and 8; 7' towards each other on the horizontal plane in order to achieve a grip with the sidewall unit through the knob extending from its top surface. Thus either one or both of the grip units 2, 2' of the grip end 1 of the side robot have gripped the detachable sidewall unit, and the sidewall unit can be transferred by the robot to the desired location in order to build the mold.

Said knob extending upwardly from the top surface of the sidewall unit advantageously forms part of the operating devices of the fastening magnet unit connected to the sidewall unit. Said knob can be for instance attached to a rod that extends on the vertical plane to the fastening magnet located inside the sidewall unit. The catch halves 3 and 4; 3' and 4' are advantageously shaped so that after the catch has gripped the knob extending from the top surface of said sidewall unit, the catch halves comprise the surfaces that are set against both the top and bottom surfaces of the knob. Thus, by pushing the grip end 1 of the side robot downwards, after setting the sidewall unit in place, it is possible to activate the fastening magnet of the sidewall unit, i.e. the magnet is made to be engaged with the casting bed for fastening the sidewall unit in place on the casting bed.

Finally, the catch halves 3 and 4; 3' and 4', are shifted further apart by shifting the vertical supports 7 and 8; 7' on the horizontal plane, so that the grip from the sidewall unit knob is released, and the side robot can be moved to get a new sidewall unit to be set on the casting bed and fastened.

When disassembling a casting mold, the side robot grips the control knob of the sidewall unit in a way described above, in which case the catch halves 3 and 4; 3' and 4' get a grip of said knob. Now, when activating the magnet, the knob that is pressed down is set near the top surface of the sidewall unit, so that when gripping the knob that is pressed down, the lower edges of the vertical supports 7 and 8; 7' and of the cover plates 5 and 6; 6' of the grip unit 2, 2' are supported against the top surface of the sidewall unit. Thereafter the eccentric 13' is rotated by turning the axis 14; 14', so that the eccentric forces the halves 3 and 4; 3' and 4' fastened to the knob to move vertically upwards along the grooves 11; 11' of the vertical supports 7 and 8; 7'. This vertical motion of the catch halves 3 and 4; 3' and 4', is sufficiently strong for disengaging the fastening magnet from the casting bed. The turning of the axis 14; 14' is advantageously realized by means of a protrusion extending to the other end of the axis on the transversal plane of said axis, and by means of a hydraulic or pneumatic cylinder connected to said protrusion.

In the above described disengaging operation, the structure of the grip units 2, 2' is thus supported, through the upper surface of the sidewall unit, against the structure of the sidewall unit, so that the force used for disengaging the magnet and the tensions created thereby are, via said support arrangements, conducted from the grip units through the sidewall unit to the casting bed, and they do not circulate via the rest of the robot structure to the robot fastening points. Thus the side robot need not be designed and constructed to resist these remarkable forces and tensions caused by the disengagement of the fastening magnets.

Advantageously the grip end 1 of the side robot, illustrated in the drawings, forms part of a portal-type side robot, where the grip end is controlled on the horizontal plane by intermediation of rails or guides.

Moreover, as is described in the example of the drawings, the side robot according to the invention comprises two adjacently arranged grip units 2, 2', and their grip devices 3 and 4; 3' and 4' are set to move along the same plane, intersecting both grip units.

Apart from disengaging fastening magnets located inside a sidewall unit, the arrangement according to the invention can also be applied to disengaging separate magnet units used for fastening sidewall units to a casting bed. Now the structure of the grip unit of a side robot is arranged to be supported to the frame structure of the separate magnet unit during the disengaging operation.

The invention is not restricted to the above described embodiment only, but it can be modified in ways obvious to a person skilled in the art, within the scope of the appended claims.

## Claims

1. Method for disengaging a fastening magnet of a detachable sidewall unit from a casting bed by a side robot, the sidewall unit comprising a fastening magnet and a structure surrounding the fastening magnet in which method the magnet operating means extending from the top surface of the structure surrounding the fastening magnet are gripped by the grip means (3, 4; 3', 4') of the grip unit (2; 2'), **characterized in that** in the method, the grip unit (2; 2') of the side robot is supported against the structure surrounding the fastening magnet, whereafter the grip means (3, 4; 3', 4') of the grip unit are moved in relation to the grip unit in order to disengage the fastening magnet from the casting bed.

2. A method according to claim 1, **characterized in that** the grip means (3, 4; 3', 4') of the grip unit (2; 2') of the side robot (1) are moved vertically in relation to the grip unit.

3. A method according to claim 1 or 2, **characterized in that** the motion of the grip means (3, 4; 3', 4') of the grip unit (2; 2') of the side robot, in relation to the grip unit, is achieved by rotating an eccentric (13').

4. A method according to any of the claims 1-3, **characterized in that** the structure surrounding the fastening magnet is a detachable sidewall unit, or the structure surrounding the fastening magnet is the frame of a separate fastening magnet unit.

5. A system comprising a side robot and a detachable sidewallunit comprising a fastening magnet and a structure surrounding the fastening magnet, said side robot for disengaging the fastening magnet of a detachable sidewall unit from a casting bed, said side robot comprising a grip unit (2; 2'), and said grip unit comprising grip means (3, 4; 3', 4') for gripping the magnet operating means extending from the top surface of the structure surrounding the fastening magnet, **characterized in that** the grip unit (2; 2') of the side robot (1) comprises means (5, 6, 7, 8; 6', 7') for supporting the grip unit against the structure surrounding the fastening magnet, and means (11, 12, 14; 11', 12', 13', 14') for moving the grip means (3, 4; 3', 4') in relation to the grip unit.

6. A system according to claim 5, **characterized in that** the means (11, 12, 14; 11', 12', 13', 14') for moving the grip means (3, 4; 3', 4') in relation to the grip unit (2; 2') create a vertical motion of the grip means in relation to the grip unit.

7. A system according to claim 5 or 6, **characterized in that** the means for moving the grip means in relation to the grip unit (2; 2') include an eccentric (13).

8. A system according to any of the claims 5 - 7, **characterized in that** the side robot (1) comprises two adjacently positioned grip units (2; 2'), the grip means (3, 4; 3', 4') of said grip units being set to move along the same vertical plane intersecting each grip unit.

9. A system according to any of the claims 5 - 8, **characterized in that** the side robot (1) is a portal-type robot.

## Patentansprüche

1. Verfahren zum Ablösen eines Befestigungsmagneten einer abnehmbaren Seitenwandeinheit von einem Gießbett durch einen Seitenroboter, wobei die Seitenwandeinheit einen Befestigungsmagneten und eine Struktur umfasst, die den Befestigungsmagneten umgibt, wobei in dem Verfahren die Magnetbetätigungsmittel, die sich von der oberen Fläche der Struktur erstrecken, die den Befestigungsmagneten umgibt, durch die Greifmittel (3, 4; 3', 4') der Greifeinheit (2; 2') gegriffen werden, **dadurch gekennzeichnet, dass** in dem Verfahren die Greifeinheit (2, 2') des Seitenroboters gegen die Struktur gestützt wird, die den Befestigungsmagneten umgibt, wonach die Greifmittel (3, 4; 3', 4') der Greifeinheit in Bezug zu der Greifeinheit bewegt werden, um den Befestigungsmagneten aus dem Gießbett abzulösen.

2. Verfahren nach Anspruch 1, **dadurch gekennzeichnet, dass** die Greifmittel (3, 4; 3', 4') der Greifeinheit (2; 2') des Seitenroboters (1) vertikal in Bezug zu der Greifeinheit bewegt werden.

3. Verfahren nach Anspruch 1 oder 2, **dadurch gekennzeichnet, dass** die Bewegung der Greifmittel (3, 4; 3', 4') der Greifeinheit (2; 2') des Seitenroboters in Bezug zu der Greifeinheit durch Drehen eines Exzenters (13') bewerkstelligt wird.

4. Verfahren nach einem der Ansprüche 1 bis 3, **dadurch gekennzeichnet, dass** die Struktur, die den Befestigungsmagneten umgibt, eine abnehmbare Seitenwandeinheit ist, oder die Struktur, die den Befestigungsmagneten umgibt, der Rahmen einer getrennten Befestigungsmagneteinheit ist.

5. System, das einen Seitenroboter und eine abnehmbare Seitenwandeinheit umfasst, die einen Befestigungsmagneten und eine Struktur umfasst, die den Befestigungsmagneten umgibt, wobei der Seitenroboter zum Ablösen des Befestigungsmagneten einer abnehmbaren Seitenwandeinheit von einem Gießbett bestimmt ist, wobei der Seitenroboter eine Greifeinheit (2; 2') umfasst und die Greifeinheit Greifmittel (3, 4; 3', 4') zum Greifen der Magnetbetätigungsmittel umfasst, die sich von der oberen Fläche der Struktur erstrecken, die den Befestigungsmagneten umgibt, **dadurch gekennzeichnet, dass** die Greifeinheit (2; 2') des Seitenroboters (1) Mittel (5, 6, 7, 8; 6', 7') zum Stützen der Greifeinheit gegen die Struktur, die den Befestigungsmagneten umgibt, und Mittel (11, 12, 14; 11', 12', 13', 14') zum Bewegen der Greifmittel (3, 4; 3', 4') in Bezug zu der Greifeinheit umfasst.

6. System nach Anspruch 5, **dadurch gekennzeichnet, dass** die Mittel (11, 12, 14; 11', 12', 13', 14') zum Bewegen der Greifmittel (3, 4; 3', 4') in Bezug zu der Greifeinheit (2; 2') eine vertikale Bewegung der Greifmittel in Bezug zu der Greifeinheit erzeugen.

7. System nach Anspruch 5 oder 6, **dadurch gekennzeichnet, dass** die Mittel zum Bewegen der Greifmittel in Bezug zu der Greifeinheit (2; 2') einen Exzenter (13) umfassen.

8. System nach einem der Ansprüche 5 bis 7, **dadurch gekennzeichnet, dass** der Seitenroboter (1) zwei benachbart positionierte Greifeinheiten (2; 2') umfasst, wobei die Greifmittel (3, 4; 3', 4') der Greifeinheiten eingestellt sind, um sich entlang der gleichen vertikalen Ebene zu bewegen, die jede Greifeinheit schneidet.

9. System nach einem der Ansprüche 5 bis 8, **dadurch gekennzeichnet, dass** der Seitenroboter (1) ein Roboter vom Portaltyp ist.

## Revendications

1. Procédé pour désengager un aimant de fixation d'une unité de paroi latérale détachable d'un lit de coulée par un robot latéral, l'unité de paroi latérale comprenant un aimant de fixation et une structure entourant l'aimant de fixation, dans lequel procédé, le moyen fonctionnel de l'aimant s'étendant de la surface supérieure de la structure entourant l'aimant de fixation est pris par des moyens de préhension (3, 4 ; 3', 4') de l'unité de préhension (2 ; 2'), **caractérisé en ce que** dans le procédé, l'unité de préhension (2 ; 2') du robot latéral est supportée contre la structure entourant l'aimant de fixation, après quoi les moyens de préhension (3, 4 ; 3', 4') de l'unité de préhension sont déplacés par rapport à l'unité de préhension afin de désengager l'aimant de fixation du lit de coulée.

2. Procédé selon la revendication 1, **caractérisé en ce que** les moyens de préhension (3, 4 ; 3', 4') de l'unité de préhension (2 ; 2') du robot latéral (1) sont déplacés verticalement par rapport à l'unité de préhension.

3. Procédé selon la revendication 1 ou 2, **caractérisé en ce que** le mouvement des moyens de préhension (3, 4 ; 3', 4') de l'unité de préhension (2 ; 2') du robot latéral, par rapport à l'unité de préhension, sont obtenus par la rotation d'un excentrique (13').

4. Procédé selon l'une quelconque des revendications 1 - 3, **caractérisé en ce que** la structure entourant l'aimant de fixation est une unité de paroi latérale détachable, ou bien la structure entourant l'aimant de fixation est le cadre d'une unité d'aimant de fixation détachable.

5. Système comprenant un robot latéral et une unité d'aimant de fixation détachable comprenant un aimant de fixation et une structure entourant l'aimant de fixation, ledit robot latéral pour désengager l'aimant de fixation d'une unité de paroi latérale détachable d'un lit de coulée, ledit robot latéral comprenant une unité de préhension (2 ; 2') et ladite unité de préhension comprenant des moyens de préhension (3, 4 ; 3', 4') pour prendre le moyen fonctionnel de l'aimant s'étendant de la surface supérieure de la structure entourant l'aimant de fixation, **caractérisé en ce que** l'unité de préhension (2 ; 2') du robot latéral (1) comprend des moyens (5, 6, 7, 8 ; 6', 7') pour supporter l'unité de préhension contre la structure entourant l'aimant de fixation, et des moyens (11, 12, 14 ; 11', 12', 13', 14') pour déplacer les moyens de préhension (3, 4 ; 3', 4') par rapport à l'unité de préhension.

6. Système selon la revendication 5, **caractérisé en ce que** les moyens (11, 12, 14; 11', 12', 13', 14') pour déplacer les moyens de préhension (3, 4 ; 3', 4') par rapport à l'unité de préhension (2, 2') créent un mouvement vertical des moyens de préhension par rapport à l'unité de préhension.

7. Système selon la revendication 5, ou 6 **caractérisé en ce que** les moyens pour déplacer les moyens de préhension par rapport à l'unité de préhension (2 ; 2') comprennent un excentrique (13).

8. Système selon l'une quelconque des revendications 5 - 7, **caractérisé en ce que** le robot latéral (1) comprend deux unités de préhension (2 ; 2') positionnées adjacentes, les moyens de préhension (3, 4 ; 3', 4') desdites unités de préhension étant réglés pour se déplacer le long du même plan vertical coupant chaque unité de préhension.

9. Système selon l'une quelconque des revendications 5 - 8, **caractérisé en ce que** le robot latéral (1) est un robot de type portique.
